# EUROPÄISCHE PATENTSCHRIFT

(11) **EP 3 994 974 B1**
(45) Veröffentlichungstag und Bekanntmachung des Hinweises auf die Patenterteilung: **20.09.2023**
(21) Anmeldenummer: 21202923.5
(22) Anmeldetag: 15.10.2021
(51) Int. Cl.: A01F 25/18, G01N 9/32

(54) **SENSORANORDNUNG ZUR ERFASSUNG DER DICHTE VON ERNTEGUT IN EINEM SILO UND DAMIT AUSGESTATTETES VERDICHTUNGSFAHRZEUG**
SENSOR ARRANGEMENT FOR DETECTING THE DENSITY OF CROP IN A SILO AND COMPACTING VEHICLE EQUIPPED THEREWITH
DISPOSITIF CAPTEUR DESTINÉ À LA DÉTERMINATION DE LA DENSITÉ DU PRODUIT DE LA RÉCOLTE DANS UN SILO ET VÉHICULE DE COMPACTAGE ÉQUIPÉ D'UN TEL DISPOSITIF

(30) Priorität: 06.11.2020 DE 102020129359
(43) Veröffentlichungstag der Anmeldung: 11.05.2022
(73) Patentinhaber: Deere & Company, Moline, IL 61265 (US)
(72) Erfinder: BROCKE, Stefan, 68163 Mannheim (DE); VON HOLST, Christian, 68163 Mannheim (DE)
(74) Vertreter: Holst, Sönke

(56) Entgegenhaltungen:
- EP-A1- 1 795 884
- US-A1- 2018 149 570
- US-A1- 2020 281 248

## Beschreibung

Die Erfindung betrifft eine Sensoranordnung zur Erfassung der Dichte von als Silage in einem Silo abgelegten Emtegut und ein damit ausgestattetes Verdichtungsfahrzeug.

### Stand der Technik

Silage ist eine Art von Futter, das aus grünblättrigen Pflanzen hergestellt wird, welche in einem Silo eingelagert und durch eine Versäuerung stabilisiert werden. Die Versäuerung erfolgt mittels einer Gärung. Die fertige Silage kann an Kühe, Schafe und andere Wiederkäuer verfüttert werden. Der Einlager- und Gärprozess wird als Silierung bezeichnet und erfolgt unter Verwendung kompletter Graspflanzen (nicht nur der Fruchtstände), wie Mais, Sorghum oder anderer Cerealien.

In einigen Ländern (z.B. Nordamerika, Australien, Nordwesteuropa und Neuseeland) ist es üblich, die Silage in großen Halden auf dem Boden abzulegen und mit einem Ackerschlepper zu überfahren, um die Luft herauszudrücken, und sie dann mit Plastikplanen abzudecken, die durch abgefahrene Reifen oder Reifenringwände fixiert werden. In anderen Ländern (z.B. Nordeuropa) werden zum Abladen der Silage so genannte Silobunker verwendet, die einen Boden und seitliche Wände aus Beton oder anderen Materialien (z.B. Eisenbahnschwellen) umfassen. Auch hier erfolgen eine Verdichtung und eine Abdichtung mit einer Plane, die durch Reifen fixiert wird.

In der Vergangenheit wurde die Gärung üblicherweise durch indigene Mikroorganismen durchgeführt, während die Silage neuerdings hingegen in der Regel mit Siliermitteln beaufschlagt wird, in welchen spezielle Mikroorganismen enthalten sind, um die Gärung zu beschleunigen oder die Silage zu verbessem. Siliermittel können eine oder mehrere Stämme von Milchsäurebakterien enthalten, üblicherweise *Lactobacillus plantarum.* Andere verwendete Bakterien umfassen die Sorten *Lactobacillus buchneri, Enterococcus faecium und Pediococcus.*

Die im Silo eingelagerte und abgedeckte Silage wird demnach einer anaeroben Gärung unterzogen, die etwa 48 Stunden nach der Befüllung des Silos beginnt, und in den Pflanzen enthaltenen Zucker in Säure umwandelt. Die Gärung ist nach etwa 2 Wochen im Wesentlichen beendet. Bevor die anaerobe Gärung beginnt, gibt es eine aerobe Phase, in welcher der in der Silage enthaltene Sauerstoff verbraucht wird. Die Packungsdichte des Futters bestimmt die Qualität der erhaltenen Silage.

Wenn das Futter gut verdichtet wird, ist der Vorrat an Sauerstoff begrenzt und die sich ergebende säurebasierte Vergärung bewirkt eine Zerlegung der vorhandenen Kohlenhydrate in Essig-, Butter und Milchsäure. Ein derartiges Silageproduktwird als saure Silage bezeichnet. Wenn jedoch andererseits das Futter nicht gut verdichtet oder lose abgelegt wird oder das Silo erst nach und nach gefüllt wird, verläuft die Oxidation schneller und die Temperatur steigt an. In diesen Fällen kann der eindringende Sauerstoff der Luft zur Produktion von Ammoniak oder Buttersäure führen und die Silage kann im schlimmsten Fall vergiften und nicht mehr als Tierfutter verwendet werden. Falls der Gärprozess nicht sorgfältig durchgeführt und kontrolliert wird, nimmt somit die saure Silage durch übermäßige Produktion an Ammoniak oder Buttersäure (letztere ist für den Geruch ranziger Butter verantwortlich) einen unangenehmen Geruch an.

Für die Herstellung von Silage hoher Qualität ist es demnach wichtig, das Futter hinreichend gut zu verdichten, um den nachteiligen Einfluss von Sauerstoffeinschlüssen zu vermeiden. Zudem wird beim Öffnen des Silagehaufens wird Einströmung von Sauerstoff durch die Packungsdichte bestimmt. Je dichter das Silo, desto langsamer strömt nach der Öffnung Sauerstoff hinein. Je weniger Sauerstoff zur Verfügung steht, desto langsamer bauen im Silo enthaltene Bakterien und Schimmelpilze das enthaltene Protein ab. Je weniger Energie zwischen dem Öffnen des Haufens und dem Verfüttern der Silage verloren geht, hängt demnach direkt von der Packungsdichte ab.

Im Stand der Technik wurden verschiedene Vorgehensweisen zu online-Erfassung der erzielten Verdichtung noch während des laufenden Verdichtungsvorgangs beschrieben, um die Verdichtung zu automatisieren oder zumindest dem Fahrer des Verdichtungsfahrzeuges Hinweise zu geben, an welchen Stellen noch eine weitere Verdichtung vorzunehmen ist und wo nicht. Hierzu seien Messungen der Höhe des Silagehaufens vor und nach der Verdichtung (EP 3 403 487 A1, EP 3 403 488 A1), radiometrische Dichtemessungen (EP 1 795 884 A1), Radarwellen (EP 3 195 719 A1) und verschiedene, andere Messverfahren (C. Fürll et al., Prinziplösungen für die Dichtemessung in Siliergütern, Landtechnik Band 63, 2/2008, Seiten 94 bis 95) erwähnt.

Ein in der besagten Veröffentlichung von Fürll et al. erwähntes Messverfahren für die Dichtemessung in Silage ist die Strömungsmessung, die sich jedoch gemäß Fürll et al. nicht zur Messung während der Fahrt eignet. Zur Untersuchung des Porenvolumens in einer Silageprobe anhand eines aus der Bodenphysik bekannten Verfahrens auf Grundlage der Allgemeinen Gasgleichung sei auch auf R. Tölle et al., Gute Verdichtung im Silo - der Schlüssel zu hoher Konservatqualität, Bornimer Agrartechnische Berichte, Heft 68, Seiten 25 bis 34, Potsdam-Bornim 2009 und D. Rees et al, Apparatus for obtaining an undisturbed core of silage and for measuring the porosity and gas diffusion in the sample, Journal of Agricultural Engineering Research 28 (1983), 107-114 verwiesen. Dort wird eine Probe der fertigen Silage entnommen, in einen gasdichten Behälter gefüllt und mit unter einem bestimmten Druck stehender Luft beaufschlagt. Anschließend wird die Druckquelle abgetrennt und eine zweite Kammer mit dem Behälter verbunden und letztlich der sich in der Leitung zwischen den Behälter und der Kammer ergebende Druck erfasst, der ein Maß für die Porosität der Silage darstellt. Diese Messverfahren eignen sich demnach lediglich dazu, nach abgeschlossener Silierung die Dichte der Silage zu überprüfen, jedoch nicht bereits während der Verdichtung ("online").

### Aufgabe

Die im Stand der Technik beschriebenen Sensoren sind relativ aufwändig und kostspielig (Radarsensor, Höhenmessung per GPS), unter Gesichtspunkten des Arbeitsschutzes problematisch (radiometrische Messung), leiden unter fehlender Fähigkeit, in die Tiefe einzudringen (Laservermessung, Ultraschallabstandssensor) und/oder eignen sich nicht zur online-Messung (Strömungsmessung an Silageproben).

Die vorliegende Erfindung hat sich daher die Aufgabe gestellt, den erwähnten Nachteil zu vermeiden oder zumindest zu reduzieren.

### Lösung

Die vorliegende Erfindung wird durch die Patentansprüche definiert.

Eine Sensoranordnung zur Erfassung der Dichte von als Silage in einem Silo abgelegtem Emtegut umfasst eine Quelle für ein unter Druck stehendes gasförmiges Medium, eine durch eine Leitung mit der Quelle verbundene, entlang der Oberfläche der Silage bewegbare Öffnung, aus welcher das gasförmige Medium von der Quelle in die Silage hinein führbar ist, einen Sensor zur Erfassung einer Eigenschaft des durch die Leitung strömenden Mediums und eine mit dem Sensor verbundene Auswertungseinrichtung, die konfiguriert ist, ein Ausgangssignal bereitzustellen, welches eine auf dem Signal des Sensors basierende Information hinsichtlich der Dichte der Silage enthält.

Die vorliegende Erfindung basiert auf dem Gedanken, dass ein gasförmiges Medium ein dichter gepacktes Silo (d.h. als Silage abgelegtes Erntegut) langsamer und/oder mit geringeren Flussraten durchströmt als ein weniger dichtes Silo. Demnach variiert der Strömungswiderstand für das Medium in Abhängigkeit von der Dichte der Silage. Dementsprechend wird vorgeschlagen, das Erntegut durch eine entlang dessen Oberfläche führbare Öffnung mit dem gasförmigen Medium, wie Luft, durchströmen zu lassen und den Strömungswiderstand mittels eines Sensors direkt oder indirekt zu messen und somit letztlich auf die Silagedichte zu schließen und ein entsprechendes Ausgangssignal durch eine Auswertungseinrichtung bereitzustellen. Der Strömungswiderstand kann beispielsweise anhand eines Verhältnisses aus Druck und Volumenstrom ermittelt werden, wie im Folgenden beschrieben wird. Die erfindungsgemäße Sensoranordnung zeichnet sich dadurch aus, dass sie relativ einfach aufgebaut ist und dennoch relativ genaue Ergebnisse liefert.

Der Sensor kann somit konfiguriert sein, eine durch den Strömungswiderstand, welchen die Silage dem durch die Öffnung ausströmenden Medium entgegensetzt, beeinflusste Größe zu erfassen und daraus das Ausgangssignal abzuleiten.

Der Sensor kann konfiguriert sein, den Volumenstrom des Mediums durch die Leitung und somit durch die Öffnung zu erfassen.

Bei einer möglichen Ausführungsform ist die Auswertungseinrichtung mit einem in der Leitung zwischen der Quelle und der Öffnung angeordneten, den Druck des Mediums an der Öffnung beeinflussenden Ventil verbunden und die Auswertungseinrichtung konfiguriert, das Ventil derart anzusteuern, dass der von Sensor erfasste Volumenstrom einem Sollwert entspricht und anhand des Drucks des Mediums an der Öffnung bzw. stromab des Ventils, bei dem sich der Sollwerts des Volumenstroms ergibt, das Ausgangssignal zu bestimmen. Es wäre auch denkbar, eine Messung des sich einstellenden Staudruckes (stromauf des Ventils) als Ausgangssignal zu nutzen.

Bei einer weiteren, möglichen Ausführungsform ist der Druck des Mediums an der Öffnung durch ein in der Leitung zwischen der Quelle und der Öffnung angeordnetes Ventil auf einen vorbestimmten Druck einstellbar und die Auswertungseinrichtung konfiguriert, anhand des vom Sensor erfassten Volumenstroms das Ausgangssignal zu bestimmen.

Weiterhin besteht die Möglichkeit, dass der Sensor konfiguriert ist, die Strömungsgeschwindigkeit des Mediums durch die Öffnung zu erfassen. Hierzu kann der Sensor zwei Drucksensoren umfassen, die an unterschiedlichen Stellen entlang einer - sich insbesondere in Flussrichtung des Mediums kontinuierlich oder stufenförmig erweiternden Leitung zwischen der Quelle und der Öffnung angeordnet sind, und die Auswertungseinrichtung konfiguriert sein, das anhand des von den Sensoren erfassten Druckunterschiedes das Ausgangssignal zu bestimmen (so genannte Differenzdruckmessung zur Erfassung der Strömungsgeschwindigkeit).

Ein Auflageelement, das dazu dient, die Öffnung über die Silage zu führen, kann einen Schlitten oder ein mit einem perforierten Mantel versehenes, drehbares Rad umfassen, der oder das mit einer definierten Auflagekraft über das Erntegut führbar ist. Im Fall des Schlittens kann die Öffnung in den Schlitten integriert werden und im Fall des Rades wird die Öffnung durch die Perforierungen gebildet.

Je nach Lochgröße der Perforierungen im Mantel des Rades kann es sinnvoll sein, die Drehstellung des Rades um seine Achse zu erfassen und bei der Auswertung zu berücksichtigen. Diese Drehstellung hat, wenn die Lochgröße der Perforierungen relativ klein gegenüber der Größe des der Silage benachbarten Endbereichs der Leitung ist, und der gesamte Mantel des Rades performiert ist, relativ wenig Einfluss auf das Ausgangssignal des Sensors, da sich dann beim Drehen des Rads der Einfluss der jeweiligen Drehstellung des Rads und die dadurch bedingte Lage der Performationen auf das Strömungsverhalten des unter Druck stehenden Mediums nicht oder nur in vernachlässigbarem Maße auf das Ausgangssignal auswirkt. Das ist jedoch anders, wenn die Lochgröße der Perforierungen größenordnungsmäßig in den Bereich des Durchmessers des der Silage benachbarten Endbereichs der Leitung kommen sollte. In diesem Fall würde die Drehstellung des Rads das Ausgangssignal des Sensors nennenswert beeinflussen, da das zwischen den Perforierungen liegende Material des Rads den der Silage benachbarten Endbereichs der Leitung je nach Drehstellung mehr oder weniger abdeckt. Zur Lösung dieses Problems bietet es sich an, die Drehstellung des Rads zu erfassen, daraus eine Information hinsichtlich etwa der Abdeckung des der Silage benachbarten Endbereichs der Leitung durch das Rad zu ermitteln und bei der Erzeugung des Ausgangssignals des Sensors zu berücksichtigen. Insbesondere kann die Messung genau dann erfolgen, wenn die Perforation mit dem der Silage benachbarten Endbereich der Leitung ausgerichtet ist. Durch die Erfassung und/oder Berücksichtigung der Lage der Perforationen des Rads vermeidet man somit evtl. Fehler durch eine Drosselwirkung der Perforationen.

Zudem kann ein Verdichtungsfahrzeug mit einer beschriebenen Sensoranordnung ausgestattet sein. Das Verdichtungsfahrzeug kann zudem mit einer Anzeigeeinrichtung zur Anzeige eines vom Ausgangssignal der Sensoranordnung abhängigen Dichtewerts und/oder einer anhand des Ausgangssignals der Sensoranordnung abgeleiteten Anweisung an einen Bediener und/oder einer Steuereinrichtung zur selbsttätigen Beeinflussung der vom Verdichtungsfahrzeug bewirkten Verdichtung ausgestattet sein. Hierzu wird auf die Offenbarungen der 10 2020 110 297 A1 und des dort zitierten Standes der Technik verwiesen.

### Ausführungsbeispiel

In den Figuren werden drei Ausführungsformen der Erfindung gezeigt, die im Folgenden näher erläutert werden. Es zeigen:
- Fig. 1: eine seitliche schematische Ansicht eines Silos mit einem dort arbeitenden Verdichtungsfahrzeug, das mit einer Sensoranordnung zur Erfassung der Dichte des im Silo abgelegten Ernteguts ausgestattet ist,
- Fig.2: eine vergrößerte Ansicht einer ersten Ausführungsform einer Sensoranordnung,
- Fig. 3: eine vergrößerte Ansicht einer zweiten Ausführungsform einer Sensoranordnung, und
- Fig. 4: eine vergrößerte Ansicht einer dritten Ausführungsform einer Sensoranordnung.

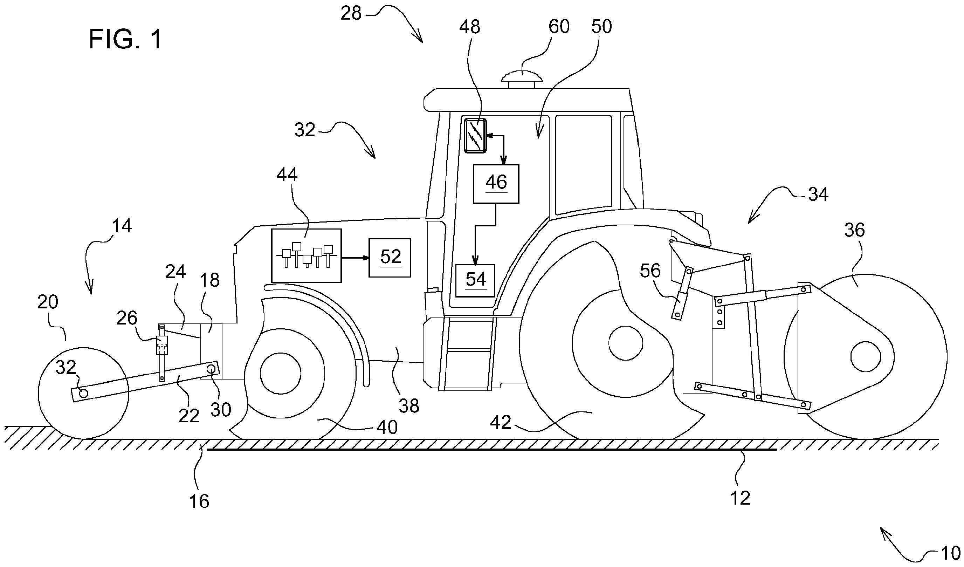

In der Figur 1 ist ein Silo 10 in Form eines so genannten Silobunkers gezeigt. Das Silo 10 umfasst einen Boden 12 und (nicht gezeigte) seitliche Wände, die üblicherweise sämtlich aus Beton hergestellt sind. Das Silo 10 ist als Fahrsilo ausgeführt, in welches zerkleinerte Grünpflanzen eingebracht, verteilt und verdichtet werden, wie im Stand der Technik an sich bekannt (EP 3 403 487 A1, EP 3 403 488 A1), und ist daher nach links und rechts hin offen. Die Grünpflanzen können mittels einer Erntekette geerntet werden, die aus einem Emtefahrzeug in Form eines Feldhäckslers und einen Zugfahrzeug mit Anhänger besteht, oder aus einem Ladewagen mit Zugfahrzeug. Das Emtegut wird vom Anhänger oder Ladewagen direkt auf das Silo 10 abgegeben oder zunächst in dessen Nähe auf einem Haufen abgelegt und durch ein geeignetes Fahrzeug oder andere Mittel auf dem Silo 10 verteilt. Das Emtegut wird anschließend durch ein Verdichtungsfahrzeug 28 verdichtet, das entlang von Überfahrtwegen über das Silo 10 bewegt wird. Bei der Ausführungsform der Figur 1 ist das Verdichtungsfahrzeug 28 mit einem ein relativ breiten Verdichtungsgerät 36 verbunden. Findet kein separates Verdichtungsgerät 36 Verwendung, kann die Verdichtung nur durch die Räder 40, 42 des Verdichtungsfahrzeugs 28 allein erfolgen. Die im Folgenden als Silage 16 bezeichneten, zerkleinerten Grünpflanzen können bei der Ernte oder während des oder nach dem Einlagern mit einem Siliermittel beaufschlagt werden, um die Vergärung zu verbessern. Zudem wird die Silage 16 nach dem Verdichten nach oben und zu den offenen Seiten des Silos 10 hin mit einer Folie abgedeckt, um sie gegen den Sauerstoff der umgebenden Luft abzuschirmen.

Das Verdichtungsfahrzeug 28 setzt sich aus einem Ackerschlepper 32 und dem an seiner Dreipunktkupplung 34 angebrachten Verdichtungsgerät 36 in Form einer Walze zusammen. Das Verdichtungsgerät 36 könnte auch entfallen bzw. durch ein Ballastgewicht ersetzt werden. Die Verdichtung erfolgt in diesem Fall durch die Räder 40, 42 des Verdichtungsfahrzeugs 28. Als Verdichtungsfahrzeug 28 könnte anstelle eines Ackerschleppers 32 auch eine Vibrationswalze (Walzenzug) oder ein beliebiges anderes Fahrzeug, z.B. eine Pistenraupe, verwendet werden. Der Ackerschlepper 32 umfasst ein tragendes Gestell 38, das sich auf lenkbaren Vorderrädern 40 und antreibbaren Hinterrädern 42 abstützt, die mit der Kurbelwelle eines Verbrennungsmotors 44 in drehmomentschlüssiger Antriebsverbindung stehen. Eine elektronische Steuereinrichtung 46 (deren Rechenleistung auch ausgelagert werden könnte, sei es auf einen beabstandeten, stationären oder als Mobilgerät ausgeführten Rechner, z.B. des Bedieners, oder die Cloud) ist mit einer Bedienerschnittstelle 48 verbunden, die dem Arbeitsplatz eines Bedieners in einer Kabine 50 zugeordnet ist. Die Steuereinrichtung 46 ist weiterhin mit einer selbsttätigen Lenk- und Geschwindigkeitskontrolleinrichtung 52, einer Reifendruckregelung 54, einer Positionsbestimmungseinrichtung 60 und einem Aktor 56 (Kraftheber) zur Verstellung der Position des Unterlenkers der Dreipunktkupplung 34 signalübertragend verbunden und ist konfiguriert, diese selbststätig zu kontrollieren. Durch den Aktor 56 kann die Andruckkraft des Verdichtungsgeräts 36 variiert und letzteres ausgehoben werden.

Das Verdichtungsfahrzeug 28 wird beim Einlagern der Silage 16 zwecks deren Verdichtung selbsttätig durch die Steuereinrichtung 46 oder durch den Fahrer gelenkt entlang von Überfahrtwegen bewegt, d.h. üblicherweise parallel zu den Seitenwänden des Silos 10 hin- und hergefahren, bis eine gewünschte Verdichtung erzielt ist. Anschließend wird eine Schicht mit neuer Silage 16 aufgebracht und wieder verdichtet, bis das Silo 10 gefüllt ist. Bei einer anderen Vorgehensweise wäre es jedoch auch möglich, das Silo 10 in horizontaler Richtung nach und nach zu befüllen und erst dann zu verdichten, wenn es gefüllt ist. Auch eine Kombination der beiden Vorgehensweisen ist denkbar. Eine mögliche Automatisierung der Verdichtung wird in der DE 10 2020 110 297 A1 beschrieben.

Zur Messung der Dichte der Silage 16 ist das Verdichtungsfahrzeug 28 mit einer Sensoranordnung 14 ausgestattet. Die Sensoranordnung 14 umfasst ein frei drehbar an einer Nabe 32 gelagertes Rad 20. Die Nabe ist an einer Schwinge 22 gelagert, die an einem Drehpunkt 30 an einer Halterung 18 angelenkt ist, welche ihrerseits an der Vorderseite des Verdichtungsfahrzeugs 28 befestigt ist, z.B. an einem Frontgewicht oder an einer vorderen Dreipunktkupplung oder durch diese gebildet wird. Ein Vorspannelement 26, das einen Endes an der Schwinge 22 und anderen Endes an einer starren Befestigung 24 angelenkt ist, dient dazu, die Schwinge 22 und somit das Rad 20 während des Verdichtungsvorgangs mit einer vorbestimmten Kraft gegen die Silage 16 vorzuspannen und die Schwinge 22 und somit das Rad 20 bei Nichtgebrauch nach oben hin in eine inaktive Position auszuheben. Die Drehachsen des Drehpunkts 30, der Nabe 32 (und somit des Rades 20) sowie die Anlenkachsen des Vorspannelements 26 sind horizontal und quer zur Vorwärtsrichtung des Verdichtungsfahrzeugs 28 orientiert, die in der Figur 1 nach links verläuft. Anders als in der Figur 1 gezeigt, könnten Schwingen 22 auf beiden Seiten des Rads 20 angeordnet sein, d.h. die Schwinge 22 als Gabel ausgeführt werden. Das Vorspannelement 26 wird dann an einer oder beiden Schwingen 22 angelenkt. Das Vorspannelement 26 kann als hydraulischer oder pneumatischer Zylinder ausgeführt sein und durch die Bordhydraulik bzw. - pneumatik des Verdichtungsfahrzeugs 28 beaufschlagt werden.

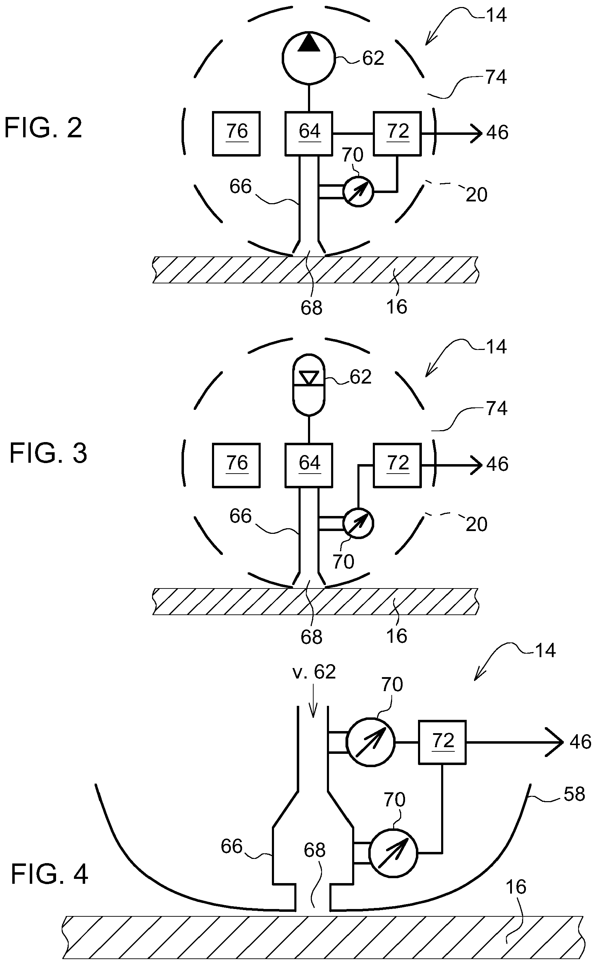

Anstelle des Rades 20 könnte für alle Ausführungsformen der Sensoranordnung 14 ein Schlitten 58 treten, wie er in der Figur 4 gezeigt wird. Bei Ausführungsformen, in denen ein Verdichtungsgerät 36 entfällt oder trotz der Anbringung eines Verdichtungsgeräts 36 an der Rückseite des Verdichtungsfahrzeuges 28 dort noch hinreichend Platz vorliegt, könnte die Sensoranordnung 14 auch dort befestigt werden, z.B. an der rückwärtigen Dreipunktkupplung 34.

Die Figur 2 zeigt eine vergrößerte, schematische Darstellung einer ersten, möglichen Ausführungsform einer Sensoranordnung 14. Die Sensoranordnung 14 umfasst eine Quelle 62 eines gasförmigen Mediums, das unter einem Überdruck steht, d.h. einen Druck aufweist, der höher als jener der Umgebungsluft ist. Das Medium ist insbesondere Druckluft, welche z.B. durch die Bordpneumatik des Verdichtungsfahrzeugs 28 (d.h. dessen Druckluftbremsanlage) bereitgestellt werden kann, oder es wird aus einer Druckgasflasche entnommen. Die Quelle 62 ist mit einem Ventil 64 verbunden, dessen freier Durchmesser durch einen elektromagnetischen Aktor verstellbar ist, und das mit einer Auswertungseinrichtung 72 elektrisch verbunden ist. Das Ventil 64 ist auslassseitig mit einer Leitung 66 verbunden, die an ihrem unteren Ende in eine Öffnung 68 übergeht, welche der Unterseite des Rads 20 zugewandt und benachbart ist. Ein Sensor 70 erfasst den Volumenstrom in der Leitung 66 und führt der Auswertungseinrichtung 72 ein entsprechendes, elektrisches Signal zu, das eine Information hinsichtlich des Volumenstroms in der Leitung 66 und somit durch die Öffnung 68 enthält. Die Leitung 66, der Sensor 70 und die Öffnung 68 drehen sich nicht mit dem Rad 20 mit, wenn letzteres über die Silage 16 bewegt wird, sondern sind starr mit der Schwinge 22 gekoppelt, sodass die Öffnung 68 während des Verdichtungsbetriebes kontinuierlich nach unten ausgerichtet ist. Die Quelle 62 kann, wie bereits erwähnt, an Bord des Verdichtungsfahrzeugs 28 angeordnet werden, was analog für das Ventil 64 und die Auswertungseinrichtung 72 gilt, oder sie sind, wie in der Figur 2 gezeigt, räumlich in das Rad 20 der Sensoranordnung 14 integriert.

Das Rad 20 umfasst einen perforierten, seinen Umfang bildenden Mantel, sodass das Gas aus dem der Silage 16 benachbarten Endbereich der Leitung 66 durch den (die Öffnung 68 bildenden) Mantel des Rades 20 hindurch in die Silage 16 strömen kann. Zur Seite hin kann das Rad 20 durch Speichen (oder geschlossene Wände) mit der Nabe 32 verbunden sein. Die Lochgröße der Perforierungen 74 entspricht in den Figuren 2 und 3 etwa dem Durchmesser des dem der Silage 16 benachbarten Endbereichs der Leitung 66. Der der Silage 16 benachbarte Endbereich der Leitung 66 kann einen Querschnitt beliebiger Form haben, d.h. beispielsweise rechteckig, kreisförmig oder oval sein. Der Querschnitt der Perforierungen 74 kann analog beliebig sein, z.B. rechteckig, kreisförmig oder oval. Insbesondere stimmen die Querschnitte der Perforierungen 74 und des der Silage 16 benachbarten Endbereichs der Leitung 66 in der Form und in den Abmessungen zumindest etwa überein, oder die Perforierungen 74 sind größer dimensioniert als der der Silage 16 benachbarte Endbereich der Leitung 66. Durch die relativ große Bemessung der Lochgröße der Perforierungen 74 erreicht man, dass sich möglichst wenig Partikel der Silage 16 in den Perforierungen 74 ansammeln. Es wäre jedoch auch denkbar, die Lochgröße der Perforierungen 74 kleiner als die Größe des der Silage 16 benachbarten Endbereichs der Leitung 66 zu wählen, um einen kontinuierlichen Messbetrieb zu ermöglichen, bei dem das Ausströmen des gasförmigen Mediums aus der Leitung 66 nicht regelmäßig durch das Material des Rads 20, das zwischen den Perforierungen 74 verbleibt, unterbrochen wird, bzw. sich die beim Drehen des Rads 20 ändernde, durch das Material des Mantels des Rads 20 zwischen den Perforierungen 74 bedingte Drosselwirkung über die Zeit zumindest näherungsweise herausmittelt.

Bei der in den Figuren 2 und 3 gezeigten Ausführungsform, in der die Lochgröße der Perforierungen 74 etwa der Abmessung des der Silage 16 benachbarten Endbereichs der Leitung 66 entspricht, wird die Leitung 66 regelmäßig durch das Material des Rads 20, das sich zwischen den Perforierungen 74 befindet, abgedeckt. Um diesen verfälschenden Einfluss auf das Ausgangssignal der Auswertungseinrichtung 72 zu vermeiden, kann die Drehstellung des Rads 20 durch einen Drehwinkelsensor 76 erfasst werden (auch bei der Ausführungsform nach Figur 3). Anhand eines bekannten, in der Auswertungseinrichtung 72 abgespeicherten Zusammenhangs zwischen der Drehstellung des Rads 20 und der Lage der Perforierungen 74 kann die mit dem Drehwinkelsensor 76 verbundene Auswertungseinrichtung 72 konfiguriert sein, den Einfluss der Drehstellung des Rads 20 auf das Ausgangssignal zu berücksichtigen, insbesondere indem eine Messung nur dann erfolgt, wenn eine Perforierung 74 genau mit dem unteren Endbereich der Leitung 66 ausgerichtet ist.

Die Funktionsweise der in Figur 2 gezeigten, ersten Ausführungsform beruht darauf, dass die Dichte der Silage 16 das Strömungsverhalten des aus der Öffnung 68 nach unten hin ausströmenden gasförmigen Mediums beeinflusst. Ist die Silage 16 gut verdichtet, stellt sie dem gasförmigen Medium einen nennenswerten Strömungswiderstand entgegen, der hingegen kleiner sein wird, wenn die Silage 16 weniger gut verdichtet sein sollte. Um eine für den erwähnten Strömungswiderstand repräsentative Größe erfassen zu können, ist vorgesehen, dass die Auswertungseinrichtung 72 während des Betriebes das Ventil 64 derart (durch elektrisches Verstellen des dem Ventil 64 zugeordneten Aktors) einstellt, dass der Sensor 70 der Auswertungseinrichtung 72 einen vorbestimmten Wert für den Volumenstrom in der Leitung 66 anzeigt. Wenn somit der vorbestimmte Wert für den Volumenstrom bei einem relativ wenig geöffneten Ventil 64 erreicht wird, ist die Silage 16 in höherem Maße verdichtet als wenn das Ventil 64 zur Herstellung desselben Volumenstroms weiter geöffnet werden muss. Das Stellsignal an das Ventil 64 oder ein stromauf oder stromab des Ventils 64 durch einen weiteren Sensor (nicht gezeigt) gemessener Druck ist somit ein Maß für die Dichte der Silage 16. Die Auswertungseinrichtung 72 gibt das besagte Stellsignal oder einen der Druckwerte (oder einen davon abhängigen, insbesondere auf die Dichte der Silage kalibrierten, beispielsweise in kg/m³ oder Anteil des Ernteguts am Silagevolumen in % gemessenen) Wert an die Steuereinrichtung 46 weiter. Letztere kann den ermittelten Wert der Dichte auf der Bedienerschnittstelle 48 und/oder daraus abgeleitete Hinweise an den Bediener, aus denen er erkennen kann, ob und wo die Silage noch nachzuverdichten ist, anzeigen, oder diesen Wert zur selbsttätigen Ansteuerung des Verdichtungsfahrzeugs 32 nutzen, wie es an sich aus der DE 10 2020 110 297 A1 bekannt ist. Die Sensoranordnung 14 kann kontinuierlich arbeiten oder nur intermittierend aktiviert werden, z.B. nach Zurücklegen definierter Wegstrecken, beispielsweise alle 0,5 m, bzw. genau dann eine Messung durchführen und ein Ausgangssignal bereitstellen, wenn der untere Endbereich der Leitung 66 mit einer Perforierung 74 ausgerichtet ist, was wie oben beschrieben anhand des Drehwinkelsensors 76 erfasst werden kann.

Bei der in der Figur 3 gezeigten, zweiten Ausführungsform der Sensoranordnung 14 sind mit der ersten Ausführungsform übereinstimmende oder äquivalente Elemente mit denselben Bezugszeichen gekennzeichnet. Die Quelle 62 ist hier als Druckspeicher eingezeichnet, kann jedoch durch eine der im Zusammenhang mit der Figur 2 erwähnten Quellen ersetzt werden. Das Ventil 64 ist bei der zweiten Ausführungsform ein Druckminderventil, stellt an seinem Auslass demnach das Medium mit einem vorbestimmten Druck bereit. Das Medium strömt vom Ventil 64 durch die Leitung 66 und durch die Öffnung 68 und schließlich in die Silage 16. Der Sensor 70 erfasst, wie bei der ersten Ausführungsform, den Volumenstrom des Mediums durch die Leitung 66. Die Auswertungseinrichtung 72 ist mit dem Sensor 70 elektrisch verbunden, wie auch mit der Steuereinrichtung 46.

Die Funktionsweise der zweiten Ausführungsform ist ähnlich jener der ersten Ausführungsform, arbeitet jedoch nicht mit konstantem Fluss des Mediums wie die erste Ausführungsform, sondern mit konstantem Druck und es wird der vom Strömungswiderstand, die das gasförmige Medium in der Silage 16 erfährt, abhängige Volumenstrom erfasst. Die Auswertungseinrichtung 72 gibt das besagte Signal des Sensors 70 (oder einen davon abhängigen, insbesondere auf die Dichte der Silage kalibrierten) Wert an die Steuereinrichtung 46 weiter, welche ihn in der hinsichtlich der ersten Ausführungsform beschriebenen Weise verwendet.

Bei der in der Figur 4 gezeigten, dritten Ausführungsform der Sensoranordnung 14 sind mit der ersten bzw. zweiten Ausführungsform übereinstimmende oder äquivalente Elemente ebenfalls mit denselben Bezugszeichen gekennzeichnet. Bei der Sensoranordnung nach Figur 4 wurde das Rad 20 durch eine Kufe 58 ersetzt, welche mittels der Schwinge 22 der Figur 1 mit einem durch das Vorspannelement 26 definierten Druck über die Silage 16 geführt wird.

Die Leitung 66 erweitert sich stromab der Quelle 62 kontinuierlich oder stufenförmig und je ein Sensor 70, der jedoch als Drucksensor ausgeführt ist, ist einem Abschnitt der Leitung 66 zugeordnet, der einen anderen Durchmesser aufweist als der dem anderen Sensor 70 zugeordnete Abschnitt der Leitung 66. Am unteren Ende, unmittelbar stromauf und oberhalb der Öffnung 68 verengt sich die Leitung 66 wieder, was jedoch optional ist.

Die Funktionsweise der dritten Ausführungsform beruht auf einer Messung der- von der Dichte der Silage 16 abhängigen - Strömungsgeschwindigkeit des Mediums durch die Silage 16 und somit durch die Leitung 66. Bei dichter Silage 16 wird die Strömungsgeschwindigkeit durch die Leitung - bei konstantem Druck der Quelle 62 - kleiner sein als bei weniger dichter Silage, da im zweiten Fall mehr vom Medium durch die Öffnung 68 abströmen wird. Die Strömungsgeschwindigkeit könnte direkt durch einen einzigen, als Geschwindigkeitssensor ausgeführten Sensor 70 erfasst werden, der beispielsweise auch anstelle des den Volumenstrom erfassenden Sensors 70 der Ausführungsform der Figur 2 oder 3 treten könnte, wird bei der Ausführungsform der Figur 4 jedoch anhand einer Differenzdruckmessung ermittelt. Dazu sind beide Sensoren 70 als Drucksensor ausgeführt, wie bereits erwähnt, und Abschnitten der Leitung 66 mit unterschiedlichen Durchmessern und somit unterschiedlichen Strömungsgeschwindigkeiten und Drücken zugeordnet. In der Figur 4 findet somit ein so genannter Differenzdrucksensor zur Bestimmung der Strömungsgeschwindigkeit Verwendung. Die mit beiden Sensoren 70 verbundene Auswertungseinrichtung 72 ermittelt demnach anhand der Signale beider Sensoren 70 und der bekannten Durchmesser der Leitung 66 die Strömungsgeschwindigkeit (z.B. unter Verwendung des Satzes von Bernoulli) und anhand davon wiederum einen von der Dichte der Silage 16 abhängigen Wert und führt ihn an die Steuereinrichtung 46 weiter, welche ihn in der hinsichtlich der ersten Ausführungsform beschriebenen Weise verwendet.

## Patentansprüche

1. Sensoranordnung (14) zur Erfassung der Dichte von als Silage (16) in einem Silo (10) abgelegtem Emtegut, **gekennzeichnet durch**:
eine Quelle (62) für ein unter Druck stehendes gasförmiges Medium,
eine durch eine Leitung (66) mit der Quelle (62) verbundene, entlang der Oberfläche der Silage (16) bewegbare Öffnung (68), aus welcher das gasförmige Medium von der Quelle (62) in die Silage (16) hinein führbar ist,
einen Sensor (70) zur Erfassung einer Eigenschaft des durch die Leitung (66) strömenden Mediums,
und eine mit dem Sensor (70) verbundene Auswertungseinrichtung (72), die konfiguriert ist, ein Ausgangssignal bereitzustellen, welches eine auf dem Signal des Sensors (70) basierende Information hinsichtlich der Dichte der Silage (16) enthält.

2. Sensoranordnung (14) nach Anspruch 1, wobei der Sensor (70) konfiguriert ist, eine durch den Strömungswiderstand, welchen die Silage (16) dem durch die Öffnung (68) ausströmenden Medium entgegensetzt, beeinflusste Größe zu erfassen und daraus das Ausgangssignal abzuleiten.

3. Sensoranordnung (14) nach Anspruch 2, wobei der Sensor (70) konfiguriert ist, den Volumenstrom des Mediums durch die Leitung (66) zu erfassen.

4. Sensoranordnung (14) nach Anspruch 3, wobei die Auswertungseinrichtung (72) mit einem verstellbaren, zwischen der Quelle (62) und der Öffnung (68) angeordneten, den Druck des Mediums an der Öffnung (68) beeinflussenden Ventil (64) verbunden ist, und die Auswertungseinrichtung (72) konfiguriert ist, das Ventil (64) derart anzusteuern, dass der von Sensor (70) erfasste Volumenstrom einem Sollwert entspricht und anhand des stromauf oder stromab des Ventils (64) gemessenen Drucks das Ausgangssignal zu bestimmen.

5. Sensoranordnung (14) nach Anspruch 3, wobei der Druck des Mediums an der Öffnung (68) durch ein zwischen der Quelle (62) und der Öffnung (68) angeordnetes Ventil (64) auf einen vorbestimmten Druck einstellbar ist und die Auswertungseinrichtung (72) konfiguriert ist, anhand des vom Sensor (70) erfassten Volumenstroms das Ausgangssignal zu bestimmen.

6. Sensoranordnung (14) nach Anspruch 2, wobei der Sensor (70) konfiguriert ist, die Strömungsgeschwindigkeit des Mediums durch die Öffnung (68) zu erfassen.

7. Sensoranordnung (14) nach Anspruch 6, wobei der Sensor (70) zwei Drucksensoren umfasst, die an unterschiedlichen Stellen entlang der Leitung (66) zwischen der Quelle (62) und der Öffnung (68) angeordnet sind, und die Auswertungseinrichtung (72) konfiguriert ist, anhand des von den Drucksensoren erfassten Druckunterschiedes das Ausgangssignal zu bestimmen.

8. Sensoranordnung (14) nach einem der vorhergehenden Ansprüche, welche ein Auflageelement zur Führung der Öffnung (68) auf der Silage (16) in Form eines Schlittens (58) oder eines mit einem perforierten Mantel versehenen, drehbaren Rades (20) umfasst, der oder das mit einer definierten Auflagekraft über die Silage (16) führbar ist.

9. Sensoranordnung (14) nach Anspruch 8, wobei die Abmessungen des der Silage (16) benachbarten, offenen Endes der Leitung (66) zumindest etwa mit den Abmessungen der einen oder mehreren Perforierungen (74) des Mantels des Rads (20) übereinstimmen und die Auswertungseinrichtung (72) mit einem Drehwinkelsensor (76) zur Erfassung des Drehwinkels des Rads (20) verbunden und konfiguriert ist, genau dann ein Ausgangssignal bereitzustellen, wenn anhand des Signals des Drehwinkelsensors (76) erkennbar ist, dass eine Perforation (74) mit dem offenen Ende der Leitung (66) ausgerichtet ist.

10. Verdichtungsfahrzeug (28) mit einer Sensoranordnung (14) nach einem der vorhergehenden Ansprüche, umfassend eine Bedienerschnittstelle (48) zur Anzeige eines vom Ausgangssignal der Sensoranordnung (14) abhängigen Dichtewerts und/oder einer anhand des Ausgangssignals der Sensoranordnung (14) abgeleiteten Anweisung an einen Bediener und/oder einer Steuereinrichtung (46) zur selbsttätigen Beeinflussung der vom Verdichtungsfahrzeug (28) bewirkten Verdichtung.

## Claims

1. Sensor arrangement (14) for detecting the density of harvested crops deposited as silage (16) in a silo (10), **characterized by**:
a source (62) of a pressurized gaseous medium,
an opening (68) which is connected by a line (66) to the source (62) and which is movable along the surface of the silage (16), the gaseous medium being able to be guided out of said opening from the source (62) into the silage (16),
a sensor (70) for detecting a property of the medium flowing through the line (66),
and an evaluation device (72) which is connected to the sensor (70) and which is configured to provide an output signal which contains information based on the signal of the sensor (70) regarding the density of the silage (16).

2. Sensor arrangement (14) according to Claim 1, wherein the sensor (70) is configured to detect a variable influenced by the flow resistance which the silage (16) applies against the medium flowing out through the opening (68) and to derive the output signal therefrom.

3. Sensor arrangement (14) according to Claim 2, wherein the sensor (70) is configured to detect the volumetric flow of the medium through the line (66).

4. Sensor arrangement (14) according to Claim 3, wherein the evaluation device (72) is connected to an adjustable valve (64) which is arranged between the source (62) and the opening (68) and which influences the pressure of the medium at the opening (68), and the evaluation device (72) is configured to activate the valve (64), such that the volumetric flow rate detected by the sensor (70) corresponds to a target value, and to determine the output signal on the basis of the pressure measured upstream or downstream of the valve (64).

5. Sensor arrangement (14) according to Claim 3, wherein the pressure of the medium at the opening (68) is adjustable to a predetermined pressure by a valve (64) arranged between the source (62) and the opening (68), and the evaluation device (72) is configured to determine the output signal on the basis of the volumetric flow rate detected by the sensor (70).

6. Sensor arrangement (14) according to Claim 2, wherein the sensor (70) is configured to detect the flow rate of the medium through the opening (68).

7. Sensor arrangement (14) according to Claim 6, wherein the sensor (70) comprises two pressure sensors which are arranged at different points along the line (66) between the source (62) and the opening (68), and the evaluation device (72) is configured to determine the output signal on the basis of the pressure difference detected by the pressure sensors.

8. Sensor arrangement (14) according to one of the preceding claims, said sensor arrangement comprising a bearing element for guiding the opening (68) on the silage (16) in the form of a runner (58) or a rotatable wheel (20) which is provided with a perforated lateral surface and which is able to be guided with a defined bearing force over the silage (16) .

9. Sensor arrangement (14) according to Claim 8, wherein the dimensions of the open end of the line (66) adjacent to the silage (16) at least approximately correspond to the dimensions of the one or more perforations (74) of the lateral surface of the wheel (20), and the evaluation device (72) is connected to a rotary angle sensor (76) for detecting the rotary angle of the wheel (20) and is configured to provide an output signal precisely when it is identifiable on the basis of the signal of the rotary angle sensor (76) that a perforation (74) is aligned with the open end of the line (66).

10. Compaction vehicle (28) having a sensor arrangement (14) according to one of the preceding claims, comprising an operator interface (48) for displaying a density value which is dependent on the output signal of the sensor arrangement (14) and/or an instruction which is derived on the basis of the output signal of the sensor arrangement (14) to an operator and/or a control device (46) for automatically influencing the compaction carried out by the compaction vehicle (28).

## Revendications

1. Ensemble de détection (14) destiné à détecter la densité de récoltes déposées sous forme d'ensilage (16) dans un silo (10), **caractérisé par** :
une source (62) destinée à un milieu gazeux sous pression,
une ouverture (68) qui est reliée à la source (62) par une conduite (66), qui peut être déplacée le long de la surface de l'ensilage (16) et à partir de laquelle le milieu gazeux peut être guidé de la source (62) jusque dans l'ensilage (16),
un capteur (70) destiné à détecter une propriété du milieu qui s'écoule à travers la conduite (66),
et un dispositif d'évaluation (72) qui est relié au capteur (70) et qui est conçu pour fournir un signal de sortie qui contient des informations basées sur le signal du capteur (70) et relatives à la densité de l'ensilage (16).

2. Ensemble de détection (14) selon la revendication 1, le capteur (70) étant conçu pour détecter une grandeur, se trouvant sous l'influencée de la résistance à l'écoulement que l'ensilage (16) oppose au milieu qui s'écoule par l'ouverture (68), et en déduire le signal de sortie.

3. Ensemble de détection (14) selon la revendication 2, le capteur (70) étant conçu pour détecter le débit volumique du milieu à travers la conduite (66).

4. Ensemble de détection (14) selon la revendication 3, le dispositif d'évaluation (72) étant relié à une vanne réglable (64) qui est disposée entre la source (62) et l'ouverture (68) et qui influe sur la pression du milieu au niveau de l'ouverture (68) et le dispositif d'évaluation (72) étant conçu pour commander la vanne (64) de manière à ce que le débit volumique détecté par le capteur (70) corresponde à une valeur cible et pour déterminer le signal de sortie sur la base de la pression mesurée en amont ou en aval de la vanne (64).

5. Ensemble de détection (14) selon la revendication 3, la pression du milieu au niveau de l'ouverture (68) pouvant être réglée à une pression prédéterminée par une vanne (64) disposée entre la source (62) et l'ouverture (68) et le dispositif d'évaluation (72) étant conçu pour déterminer le signal de sortie sur la base du débit volumique détecté par le capteur (70).

6. Ensemble de détection (14) selon la revendication 2, le capteur (70) étant conçu pour détecter la vitesse d'écoulement du milieu par l'ouverture (68).

7. Ensemble de détection (14) selon la revendication 6, le capteur (70) comprenant deux capteurs de pression qui sont disposés à des points différents le long de la conduite (66) entre la source (62) et l'ouverture (68), et le dispositif d'évaluation (72) étant conçu pour déterminer le signal de sortie sur la base de la différence de pression détectée par les capteurs de pression.

8. Ensemble de détection (14) selon l'une des revendications précédentes, qui comprend un élément d'appui destiné à guider l'ouverture (68) sur l'ensilage (16) sous la forme d'un chariot (58) ou d'une roue rotative (20) qui est pourvue d'une enveloppe perforée et qui peut être guidée sur l'ensilage (16) avec une force d'appui définie.

9. Ensemble de détection (14) selon la revendication 8, les dimensions de l'extrémité ouverte, adjacente à l'ensilage (16), de la conduite (66) correspondant au moins approximativement aux dimensions d'une ou plusieurs perforations (74) de l'enveloppe de la roue (20) et le dispositif d'évaluation (72) étant relié à un capteur d'angle de rotation (76) destiné à détecter l'angle de rotation de la roue (20) et étant conçu pour fournir un signal de sortie précisément lors de la détection sur la base du signal du capteur d'angle de rotation (76) qu'une perforation (74) est alignée avec l'extrémité ouverte de la conduite (66).

10. Véhicule de compactage (28) pourvu d'un ensemble de détection (14) selon l'une des revendications précédentes, ledit véhicule comprenant une interface opérateur (48) destinée à afficher une valeur de densité qui dépend du signal de sortie de l'ensemble de détection (14) et/ou une instruction déduite du signal de sortie de l'ensemble de détection (14) et destinée à un opérateur et/ou un dispositif de commande (46) destiné à influer automatiquement sur le compactage effectué par le véhicule de compactage (28).
